# EUROPEAN PATENT SPECIFICATION

(11) **EP 3 502 861 B1**
(45) Date of publication and mention of the grant of the patent: **27.01.2021**
(21) Application number: 17210190.9
(22) Date of filing: 22.12.2017
(51) Int. Cl.: G06F 3/14, G08C 23/04

(54) **VIDEOWALL IR DISABLE**
VIDEOWANDINFORMATIONSEMPFÄNGERDEAKTIVIERUNG
DÉSACTIVATION IR DE MUR VIDÉO

(43) Date of publication of application: 26.06.2019
(73) Proprietor: Vestel Elektronik Sanayi ve Ticaret A.S., 45030 Manisa (TR)
(72) Inventor: KARA, Eren, 45030 Manisa (TR)
(74) Representative: Beck Greener LLP

(56) References cited:
- JP-A- H08 223 591
- JP-A- 2010 079 127
- US-B1- 6 624 854

## Description

### FIELD

The present invention relates to a multi-screen display apparatus and a method of controlling a multi-screen display.

### BACKGROUND

It is known to display large video display images or display pictures by using a plurality of smaller screens for a variety of reasons, including advertising, exhibitions and sports events. One common problem is to ensure that the user is able to control all of the screens at the same time without needing to use individual control devices for each display screen.

The relative positioning of screens can be input manually and adjusted to create an appropriate image. This method relies on direct input from the user to ensure that the final multi-screen image is correctly shown.

In US2011/0074666, a multi-screen display is disclosed which can be controlled by a remote controller which can control a sub-display or a portion of sub-displays as well as all sub-displays.

In CN205751232, a multi-screen display is disclosed which has multiple displays in which the infra-red control modules of each display can be turned on or off independently.

JP 2010-079127-A discloses a multidisplay apparatus with a remote control. There is an algorithm to enable one of the display apparatuses to receive the remote control commands and to disable all others.

JP H08 223591 discloses a multi display apparatus. All displays have an infra red (IR) receiver. The master display receives remote control (RC) commands. The slaves ignore RC commands to their IR receiver but are forwarded instructions from the master display.

In US6624854, a projection image device capable of controlling a plurality of projection image displays by one remote control transmitter is disclosed, which the received remote control signal is used to control a projection image display when the projection image display is in MASTER state and the remote control signal is intended for the display which is in MASTER state, and projection image display passes the remote control signal to other projection displays for their control when the projection image display is in MASTER state and the remote control signal is intended for the display which is in SLAVE state.

However, in order to select which displays can be controlled by a controller, it is necessary to undertake a number of steps.

### SUMMARY OF INVENTION

In a first aspect of the present invention, there is provided a multi-screen display apparatus comprising:
(i) a plurality of display devices in an array, wherein each display device comprises:
   a screen;
   an information receiver for receiving information from a remote control device; and
   a manually operable on/off switch for enabling and disabling the information receiver;
(ii) at least one connector for allowing the display devices to communicate with each other; and
(iii) at least one controller configured to control each information receiver and each on/off switch,
wherein the at least one controller is configured such that when a first on/off switch on a first display device is activated, the at least one controller enables the information receiver of said first display device by sending a first command to the information receiver of the first display device and disables all other information receivers in the array by sending a second command to other display devices in the array.

A multi-screen display is provided in which a single information receiver can be activated easily with all other receivers being deactivated.

In a preferred embodiment, the at least one controller additionally de-activates all other on/off switches in the array.

Each display device is formed of a screen an information receiver and an on/off switch. In standard display devices, the screen is commonly surrounded by a frame or bezel to support the structure of the screen. As the display devices are used to produce a multi-screen display for displaying images, it is preferred that the bezel is as narrow as possible in order to maximise the total screen area and avoid blank spots. In one preferred embodiment, a display device does not have a bezel and the screen extends to the edge of the display device.

However, the display device does have an on/off switch for enabling and disabling the information receiver to be activated manually by the user. The switch is typically situated on the bezel of the display device. However, where the display device does not have a bezel, it is possible to locate the switch elsewhere, so long as it is accessible to the user when the display devices are positioned in the multi-screen display. One possibility is to position the switch on the edge of screen.

The switch can take any suitable form so long as it is operable manually. In one preferred embodiment, once a switch has been activated, it remains activated until it is either de-activated manually or as a result of the controller de-activating the switch. In an alternative preferred embodiment, once the switch has been activated and has caused the controller to enable the information receiver and disable all other information receivers in the array, the switch becomes de-activated.

In one preferred embodiment, the switch is in the form of a button. In a preferred embodiment, the button contains one or more lights such as LED lights which indicate whether the button has been activated or de-activated. This embodiment is particularly suitable when the switch remains activated.

In one preferred embodiment, the button has a green LED light which lights when the switch has been activated. In a further preferred embodiment, the button has a red LED light which lights when the switch has been de-activated. It is further preferred that the button has both red and green LED lights.

In a preferred embodiment, the button is located on the bezel. In a particularly preferred embodiment, the button is located on one corner of the bezel. It is particularly preferred that the button is located on the top left corner of the bezel.

Each display additionally has an information receiver. The information receiver is typically in the form of an infra-red receiver. However, the skilled person would be aware that it is possible to have a receiver which can receive information from a remote controller by other means, such as by radio frequency such as Bluetooth or by wi-fi. Each information receiver is capable of being enabled or disabled.

In order for the display devices to communicate with one another, it is essential that there is at least one connector which connects between the display devices in an array. The skilled person would be aware of different methods to connect the display devices together to permit communication. One preferred method is to connect the display devices in a daisy chain method, in which each display device in the array is connected in series.

The skilled person would be aware of suitable connectors which would be suitable to connect the display devices in an array. In one preferred embodiment, the connector is at least one universal asynchronous receiver-transmitter (UART). This type of connector is particularly suited to connection in a daisy chain method.

The apparatus has at least one controller which is configured to control the information receivers and on/off switches. The at least one controller is configured such that when an on/off switch on a display device is activated, the information receiver on that display device is enabled. At the same time, all other on/off switches in the array are de-activated and all other information receivers are disabled.

It is preferred that each display device has a controller and that all of the controllers communicate via the at least one connector.

The apparatus of the present invention is for use with at least one remote controller. In a preferred embodiment, the apparatus additionally comprises a remote controller. The remote controller is one which can communicate with the information receivers of the display devices. It is preferred that the remote controller can communicate with any of the display devices in the array of the multi-screen display. In a preferred embodiment, the remote control provides an infra-red signal which is received by an enabled infra-red receiver.

In a second aspect, there is provided a method of controlling a multi-screen display of the first aspect comprising the steps of:
activating a first on/off switch on a first display, wherein the information receiver of said first display device is enabled by sending a first command signal to the information receiver on the first display device and all other information receivers are disabled by sending a second command signal to the controllers on the other display devices;
controlling the multi-screen display apparatus using a remote control which communicates with the multi-screen display apparatus via the information receiver of the said first display.

In a preferred embodiment, when the first on/off switch is activated, all other on/switches are de-activated;

When the on/off switch is activated in a first display device, a first controller on the first display device:
sends a first command to the information receiver of said first display device to enable the information receiver; and
sends a second command to a controller on each other display device in the array to disable the information receiver on each said other display device and optionally to de-activate the on/off switch on each said other display device.

Where an information receiver is already disabled and/or the on/off switch is de-activated on any other display device, the information receiver remains disabled and the on/off switch remains de-activated.

All features described in connection with any aspect of the invention can be used with any other aspect of the invention.

### BRIEF DESCRIPTION OF FIGURES

The invention will be further described with reference to the drawings in which:
Figure 1 shows a multi-screen display according to an exemplary embodiment of the present invention;
Figure 2 shows a flow chart of the process of controlling the multi-screen display.
Figure 3 shows a multi-screen display after operating the enabling/disabling mechanism according to an exemplary embodiment of the present invention.

### DETAILED DESCRIPTION

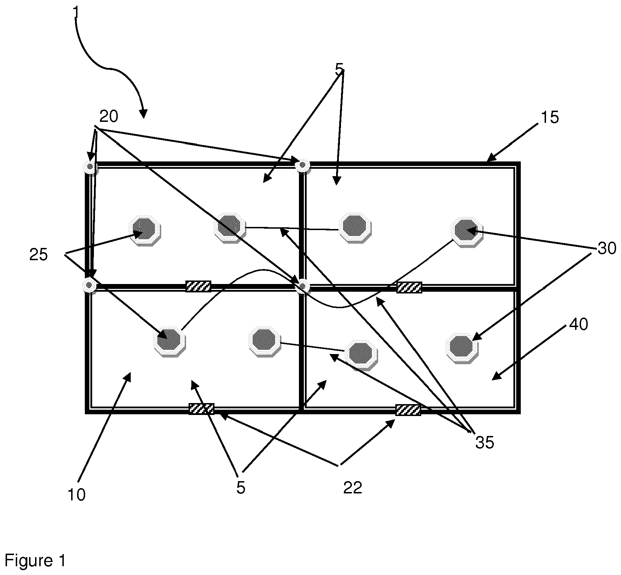

The invention relates to a multi-screen display apparatus. In Figure 1, there is disclosed a multi-screen display apparatus 1, which is formed of four display devices 5 in an array. Each display device has a screen 10, a bevel 15, an on/off button 20, positioned on the top left corner of the bevel and an infra-red receiver 22 on the bottom middle of the bevel.

On the rear of each display device 5 is a first UART port, UART0 25 and a second UART port, UART1 30. The ports are connected to each other in a daisy chain manner using UART cables 35.

Each display device has a controller (not shown).

When setting up the multi-screen display apparatus 1, the display devices 5 are attached to a support structure (not shown). The support structure can be a wall or a framework designed for receiving the display devices. The skilled person will be aware of suitable support structures.

The display devices are connected to each other using the UART cables which pass from the UART0 port of one screen to the UART1 port of an adjacent screen. The first display device in the daisy chain is identified as the master display device, shown as 40.

Each display device will typically have its own power supply (not shown). However, it is possible to connect the display devices together to use a single power supply.

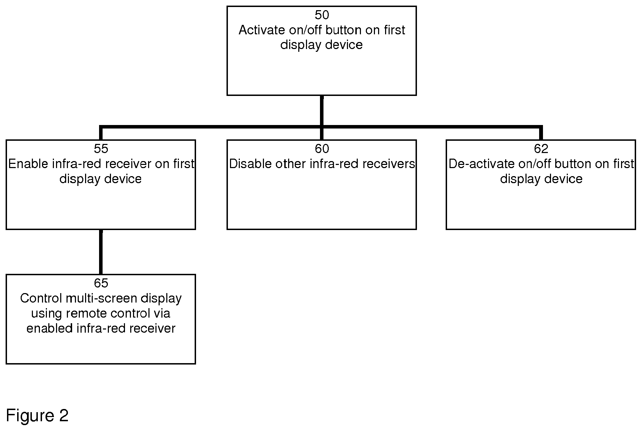

When the display devices are turned on, the infra-red receivers can be enabled or they can be disabled. The user then activates an on/off button on one of the display devices. The infra-red receiver of that display device is then enabled. That display device will now, in effect, become the primary display device which can be controlled by a remote controller. The process for controlling the multi-screen display is according to the flow chart of Figure 2. An on/off button 20 on a first display device is pushed 50. A command is sent by the controller of the first display device to the infra-red receiver of first display device to enable the infra-red receiver 55. At the same time, a command is sent by the controller of the first display device to the controllers of the other display devices 60 to disable any infra-red receivers. The command is sent via the UART cables to all other display devices. In addition, the activated on/off button will de-activate 62.

In an alternative embodiment, the activated on/off button will remain activated and the controllers will additionally deactivate any other on/off buttons.

The multi-screen display is now set up so that only one information receiver is activated and all other information receivers are disabled. The multi-screen display can now be controlled by an infra-red remote control via the infra-red receiver on the first display device 65. All on/off buttons will be de-activated.

In a preferred embodiment, the display device which has an activated information receiver will have an activated light, preferably an LED light, to indicate that it is active.

It is preferred that this light is located in the on/off button. It is further preferred that the light is green.

In an alternative embodiment, the green light additionally indicates that the on/off button is activated. In a further preferred alternative embodiment, the on/off button on each of the other display devices will have an activated red light to show that each of these is de-activated.

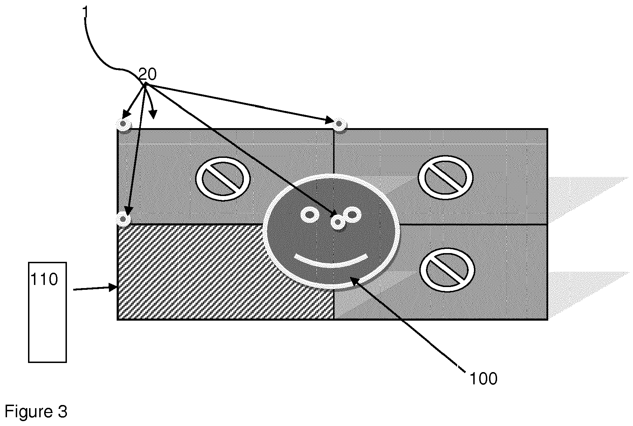

As shown in Figure 3, once a display device has been selected, in this case the bottom left screen, a remote control 110 is able to communicate with the display device, and therefore the multi-screen display apparatus via the infra-red receiver 22. The remote control cannot communicate directly with any other display devices. All communication between the remote control and other display devices is via the enabled screen. The controller of the enabled display device will then pass any information to other display devices via the at least one connector.

Whilst the invention has been described with reference to a preferred embodiment, it will be appreciated that various modifications are possible within the scope of the claims.

In this specification, unless expressly otherwise indicated, the word 'or' is used in the sense of an operator that returns a true value when either or both of the stated conditions is met, as opposed to the operator 'exclusive or' which requires that only one of the conditions is met. The word 'comprising' is used in the sense of 'including' rather than to mean 'consisting of'. No acknowledgement of any prior published document herein should be taken to be an admission or representation that the teaching thereof was common general knowledge in Europe or elsewhere at the date hereof.

## Claims

1. A multi-screen display apparatus (1) comprising:
(i) a plurality of display devices (5) in an array, wherein each display device (5) comprises:
a screen (10);
an information receiver (22) for receiving information from a remote control device and
a manually operable on/off switch (20) for enabling and disabling the information receiver;
(ii) at least one connector for allowing the display devices (5) to communicate with each other; and
(iii) at least one controller configured to control each information receiver (22) and each on/off switch (20),
wherein the at least one controller is configured such that when a first on/off switch (20) on a first display device (40) is activated, the at least one controller enables the information receiver (22) of said first display device (40) by sending a first command to the information receiver (22) of the first display device (40) and disables all other information receivers (22) in the array by sending a second command to other display devices in the array.

2. A multi-screen display apparatus (1) as claimed in Claim 1, wherein the information receiver (22) is an infra-red receiver.

3. A multi-screen display apparatus (1) as claimed in Claim 1, wherein the apparatus (1) additionally comprises a remote control for communicating with an enabled information receiver.

4. A multi-screen display apparatus (1) as claimed in Claim 2, wherein the apparatus (1) additionally comprises an infra-red remote control for communicating with an enabled information receiver.

5. A multi-screen display apparatus (1) as claimed in any one of Claims 1 to 4, wherein the at least one controller is additionally configured to de-activate all other on/off switches (20) in the array

6. A multi-screen display apparatus (1) as claimed in any one of Claims 1 to 5, wherein the at least one connector (25, 30, 35) is at least one universal asynchronous receiver-transmitter (UART).

7. A multi-screen display apparatus (1) as claimed in any one of Claims 1 to 6, wherein the connectors (25, 30, 35) connect the displays in a daisy chain method.

8. A multi-screen display apparatus (1) as claimed in any one of Claims 1 to 7, wherein the at least one controller comprises a controller on each display device (5), wherein each said controller is configured to control the information receiver (22) and on/off switch (20) of each said display device (5) and wherein the controllers are configured to communicate via the at least one connector (25, 30, 35).

9. A multi-screen display apparatus (1) as claimed in any one of Claims 1 to 8, wherein the on/off switch (20) is a button.

10. A method of controlling a multi-screen display apparatus (1), the multi-screen display apparatus (1) comprising:
(i) a plurality of display devices (5), wherein each display device (5) comprises:
(a) a screen (10);
(b) an information receiver (22) for receiving information from a remote control device;
(c) a manually operable on/off switch (20) for enabling and disabling the information receiver (22); and
(d) a controller for controlling the information receiver (22) and on/off switch (20) of said display device (5)
(ii) at least one connector (25, 30, 35) for connecting the display devices (5); and
(iii) a remote control,
wherein the method comprises:
activating an on/off switch (20) on a first of said display devices (5), wherein the controller on said first display device (40) thereby enables the information receiver (22) on said first display device (40) by sending a first command signal to the information receiver (22) on said first display device (40) and communicates with the controllers on the other display devices (5) by sending a second command signal to the controllers on the other display devices (5) and wherein each controller on each other display device (5) disables the information receiver on each other said display device (5) and optionally de-activates the on/off switch (20) on each other said display device (5); and
controlling the multi-screen display apparatus (1) using the remote control which communicates with the multi-screen display apparatus (1) via the information receiver (22) of the said first display (40).

11. The method of Claim 10, wherein the remote control and the information receiver (22) communicate using infra-red light.

## Patentansprüche

1. Mehrbildschirm-Anzeigeeinrichtung (1), die Folgendes umfasst:
(i) mehrere Anzeigevorrichtungen (5) in einer Anordnung, wobei jede Anzeigevorrichtung (5) Folgendes umfasst:
einen Bildschirm (10);
einen Informationsempfänger (22) zum Empfangen von Informationen von einer Fernsteuerungsvorrichtung und
einen manuell bedienbaren Ein/Aus-Schalter (20) zum Anschalten und Abschalten des Informationsempfängers;
(ii) wenigstens einen Verbinder zum Ermöglichen, dass die Anzeigevorrichtungen (5) miteinander kommunizieren; und
(iii) wenigstens eine Steuerung, die konfiguriert ist, um jeden Informationsempfänger (22) und jeden Ein/Aus-Schalter (20) zu steuern,
wobei die wenigstens eine Steuerung derart konfiguriert ist, dass, wenn ein erster Ein/Aus-Schalter (20) an einer ersten Anzeigevorrichtung (40) aktiviert wird, die wenigstens eine Steuerung den Informationsempfänger (22) der ersten Anzeigevorrichtung (40) durch Senden eines ersten Befehls an den Informationsempfänger (22) der ersten Anzeigevorrichtung (40) anschaltet und alle anderen Informationsempfänger (22) in der Anordnung durch Senden eines zweiten Befehls an andere Anzeigevorrichtungen in der Anordnung abschaltet.

2. Mehrbildschirm-Anzeigeeinrichtung (1) nach Anspruch 1, wobei der Informationsempfänger (22) ein Infrarotempfänger ist.

3. Mehrbildschirm-Anzeigeeinrichtung (1) nach Anspruch 1, wobei die Einrichtung (1) zusätzlich eine Fernsteuerung zum Kommunizieren mit einem angeschalteten Informationsempfänger umfasst.

4. Mehrbildschirm-Anzeigeeinrichtung (1) nach Anspruch 2, wobei die Einrichtung (1) zusätzlich eine Infrarotfernsteuerung zum Kommunizieren mit einem angeschalteten Informationsempfänger umfasst.

5. Mehrbildschirm-Anzeigeeinrichtung (1) nach einem der Ansprüche 1 bis 4, wobei die wenigstens eine Steuerung zusätzlich konfiguriert ist, um alle anderen Ein/Aus-Schalter (20) in der Anordnung zu deaktivieren.

6. Mehrbildschirm-Anzeigeeinrichtung (1) nach einem der Ansprüche 1 bis 5, wobei der wenigstens eine Verbinder (25, 30, 35) wenigstens ein universeller asynchroner Empfänger-Sender *(universal asynchronous receiver-transmitter-* UART) ist.

7. Mehrbildschirm-Anzeigeeinrichtung (1) nach einem der Ansprüche 1 bis 6, wobei die Verbinder (25, 30, 35) die Anzeigen in einem Verkettungsverfahren verbinden.

8. Mehrbildschirm-Anzeigeeinrichtung (1) nach einem der Ansprüche 1 bis 7, wobei die wenigstens eine Steuerung eine Steuerung an jeder Anzeigevorrichtung (5) umfasst, wobei jede Steuerung konfiguriert ist, um den Informationsempfänger (22) und den Ein/Aus-Schalter (20) jeder Anzeigevorrichtung (5) zu steuern und wobei die Steuerungen konfiguriert sind, um über den wenigstens einen Verbinder (25, 30, 35) zu kommunizieren.

9. Mehrbildschirm-Anzeigeeinrichtung (1) nach einem der Ansprüche 1 bis 8, wobei der Ein/Aus-Schalter (20) eine Taste ist.

10. Verfahren zum Steuern einer Mehrbildschirm-Anzeigeeinrichtung (1), wobei die Mehrbildschirm-Anzeigeeinrichtung (1) Folgendes umfasst:
(i) mehrere Anzeigevorrichtungen (5), wobei jede Anzeigevorrichtung (5) Folgendes umfasst:
(a) einen Bildschirm (10);
(b) einen Informationsempfänger (22) zum Empfangen von Informationen von einer Fernsteuerungsvorrichtung;
(c) einen manuell bedienbaren Ein/Aus-Schalter (20) zum Anschalten und Abschalten des Informationsempfängers (22); und
(d) eine Steuerung zum Steuern des Informationsempfängers (22) und des Ein/Aus-Schalters (20) der Anzeigevorrichtung (5)
(ii) wenigstens einen Verbinder (25, 30, 35) zum Verbinden der Anzeigevorrichtungen (5); und
(iii) eine Fernsteuerung,
wobei das Verfahren Folgendes umfasst:
Aktivieren eines Ein/Aus-Schalters (20) an einer ersten der Anzeigevorrichtungen (5), wobei die Steuerung an der ersten Anzeigevorrichtung (40) dadurch den Informationsempfänger (22) an der ersten Anzeigevorrichtung (40) durch Senden eines ersten Befehlssignals an den Informationsempfänger (22) an der ersten Anzeigevorrichtung (40) anschaltet und mit den Steuerungen an den anderen Anzeigevorrichtungen (5) durch Senden eines zweiten Befehlssignals an die Steuerungen an den anderen Anzeigevorrichtungen (5) kommuniziert und wobei jede Steuerung an jeder anderen Anzeigevorrichtung (5) den Informationsempfänger an jeder anderen Anzeigevorrichtung (5) abschaltet und optional den Ein/Aus-Schalter (20) an jeder anderen Anzeigevorrichtung (5) deaktiviert; und
Steuern der Mehrbildschirm-Anzeigeeinrichtung (1) unter Verwendung der Fernsteuerung, die mit der Mehrbildschirm-Anzeigeeinrichtung (1) über den Informationsempfänger (22) der ersten Anzeige (40) kommuniziert.

11. Verfahren nach Anspruch 10, wobei die Fernsteuerung und der Informationsempfänger (22) unter Verwendung von Infrarotlicht kommunizieren.

## Revendications

1. Appareil d'affichage multi-écran (1) comprenant :
(i) une pluralité de dispositifs d'affichage (5) dans un réseau, dans lequel chaque dispositif d'affichage (5) comprend :
un écran (10) ;
un récepteur d'informations (22) pour recevoir des informations d'un dispositif de télécommande et
un interrupteur marche/arrêt actionnable manuellement (20) pour activer et désactiver le récepteur d'informations ;
(ii) au moins un connecteur pour permettre aux dispositifs d'affichage (5) de communiquer entre eux ; et
(iii) au moins un dispositif de commande configuré pour commander chaque récepteur d'informations (22) et chaque interrupteur marche/arrêt (20),
dans lequel l'au moins un dispositif de commande est configuré de telle sorte que lorsqu'un premier interrupteur marche/arrêt (20) sur un premier dispositif d'affichage (40) est activé, l'au moins un dispositif de commande active le récepteur d'informations (22) dudit premier dispositif d'affichage (40) en envoyant une première commande au récepteur d'informations (22) du premier dispositif d'affichage (40) et désactive tous les autres récepteurs d'informations (22) dans le réseau en envoyant une seconde commande à d'autres dispositifs d'affichage dans le réseau.

2. Appareil d'affichage multi-écran (1) selon la revendication 1, dans lequel le récepteur d'informations (22) est un récepteur infrarouge.

3. Appareil d'affichage multi-écran (1) selon la revendication 1, dans lequel l'appareil (1) comprend en outre une télécommande pour communiquer avec un récepteur d'informations activé.

4. Appareil d'affichage multi-écrans (1) selon la revendication 2, dans lequel l'appareil (1) comprend en outre une télécommande infrarouge pour communiquer avec un récepteur d'informations activé.

5. Appareil d'affichage multi-écran (1) selon l'une quelconque des revendications 1 à 4, dans lequel l'au moins un dispositif de commande est en outre configuré pour désactiver tous les autres interrupteurs marche/arrêt (20) dans le réseau.

6. Appareil d'affichage multi-écran (1) selon l'une quelconque des revendications 1 à 5, dans lequel l'au moins un connecteur (25, 30, 35) est au moins un émetteur-récepteur asynchrone universel (UART).

7. Appareil d'affichage multi-écran (1) selon l'une quelconque des revendications 1 à 6, dans lequel les connecteurs (25, 30, 35) connectent les affichages dans un procédé en série.

8. Appareil d'affichage multi-écran (1) selon l'une quelconque des revendications 1 à 7, dans lequel l'au moins un dispositif de commande comprend un dispositif de commande sur chaque dispositif d'affichage (5), dans lequel chaque dit dispositif de commande est configuré pour commander le récepteur d'informations (22) et un interrupteur marche/arrêt (20) de chacun desdits dispositifs d'affichage (5) et dans lequel les dispositifs de commande sont configurés pour communiquer par l'intermédiaire de l'au moins un connecteur (25, 30, 35).

9. Appareil d'affichage multi-écran (1) selon l'une quelconque des revendications 1 à 8, dans lequel l'interrupteur marche/arrêt (20) est un bouton.

10. Procédé de commande d'un appareil d'affichage multi-écran (1), l'appareil d'affichage multi-écran (1) comprenant :
(i) une pluralité de dispositifs d'affichage (5), dans lequel chaque dispositif d'affichage (5) comprend :
(a) un écran (10) ;
(b) un récepteur d'informations (22) pour recevoir des informations d'un dispositif de télécommande ;
(c) un interrupteur marche/arrêt actionnable manuellement (20) pour activer et désactiver le récepteur d'informations (22) ; et
(d) un dispositif de commande pour commander le récepteur d'informations (22) et l'interrupteur marche/arrêt (20) dudit dispositif d'affichage (5)
(ii) au moins un connecteur (25, 30, 35) pour connecter les dispositifs d'affichage (5) ; et
(iii) une télécommande,
dans lequel le procédé comprend :
l'activation d'un interrupteur marche/arrêt (20) sur un premier desdits dispositifs d'affichage (5), dans lequel le dispositif de commande sur ledit premier dispositif d'affichage (40) active ainsi le récepteur d'informations (22) sur ledit premier dispositif d'affichage (40) en envoyant un premier signal de commande au récepteur d'informations (22) sur ledit premier dispositif d'affichage (40) et communique avec les dispositifs de commande sur les autres dispositifs d'affichage (5) en envoyant un second signal de commande aux dispositifs de commande sur les autres dispositifs d'affichage (5) et dans lequel chaque dispositif de commande sur chaque autre dispositif d'affichage (5) désactive le récepteur d'informations sur chacun desdits dispositifs d'affichage (5) et désactive facultativement l'interrupteur marche/arrêt (20) sur l'autre dit dispositif d'affichage (5) ; et
la commande de l'appareil d'affichage multi-écran (1) à l'aide de la télécommande qui communique avec l'appareil d'affichage multi-écran (1) par l'intermédiaire du récepteur d'informations (22) dudit premier affichage (40).

11. Procédé selon la revendication 10, dans lequel la télécommande et le récepteur d'informations (22) communiquent à l'aide d'une lumière infrarouge.
